# EUROPÄISCHE PATENTSCHRIFT

(11) **EP 0 882 628 B1**
(45) Veröffentlichungstag und Bekanntmachung des Hinweises auf die Patenterteilung: **07.08.2002**
(21) Anmeldenummer: 98109753.8
(22) Anmeldetag: 28.05.1998
(51) Int. Cl.: B60R 21/26, F42B 3/04

(54) **Gasgenerator**
Gas generator
Générateur de gaz

(30) Priorität: 03.06.1997 DE 19723260
(43) Veröffentlichungstag der Anmeldung: 09.12.1998
(73) Patentinhaber: TRW Airbag Systems GmbH & Co. KG, 84544 Aschau am Inn (DE)
(72) Erfinder: Barth, Thomas, 81929 München (DE); Hofmann, Achim Dr., 84570 Polling (DE); Leifheit, Markus, 85452 Moosinning (DE); Werneth, Josef, 84539 Ampfing (DE); Esau, Anja, 84453 Mühldorf (DE)
(74) Vertreter: Kitzhofer, Thomas, Dipl.-Ing.

(56) Entgegenhaltungen:
- EP-A- 0 741 064
- DE-A- 2 150 744
- US-A- 3 901 530
- US-A- 5 558 366
- US-A- 5 601 308

## Beschreibung

Die Erfindung betrifft einen Gasgenerator, gemäß dem Oberbegriff des Anspruchs 1.

Bei bislang üblichen Gasgeneratoren grenzt der Zünder, meist durch eine das Zündmaterial umgebende Zündkappe abgedeckt, unmittelbar an den zu zündenden Treibstoff an, der in der Brennkammer angeordnet ist. Deshalb erstreckt sich der Zünder in die Brennkammer. Damit der Gasgenerator möglichst schnell Gas freisetzt, muß der Treibstoff schnell und gleichmäßig gezündet werden. Deshalb sind beispielsweise an den Zünder angrenzende Booster-Ladungen vorgesehen, die die Zündwirkung verstärken. Beim Abbrennen des Zündmaterials und, wenn vorhanden, auch des Booster-Materials wird eine Druckwelle erzeugt, die die Treibstofftabletten teilweise zerstören kann, was nachteilig für das Abbrennverhalten sowie für die Vorbestimmbarkeit des Gasdruckverlaufs ist.

Die gattungsgemäße DE-A-2 150 744 zeigt einen Festtreibstoff-Gasgenerator, dessen Brennkammer vom Zünder beabstandet angeordnet ist. Ein über dem Zünder angeordneter Diffusor schafft einen Expansionsraum um den Zünder, in dem sich das bei der Zündung freigesetzte Gas ausdehnt, bevor es durch Öffnungen im Diffusor in die Brennkammer strömt.

In der US-A-5 601 308 ist ein Hybrid-Gasgenerator beschrieben. Ein Zünder ist in einer dichtschließenden, aufsprengbaren Hülle angeordnet. In einer die Hülle umgebenden Brennkammer ist ein röhrenförmiger Festtreibstoffblock vom Zünder beabstandet gehalten. Das Gehäuse der Brennkammer ist beweglich und wird vom abgesprengten Teil der Zünderhülle verschoben, um eine vor einer Ausströmöffnung gelegenen Berstscheibe zu zerstören, wenn der Gasgenerator aktiviert wird. Dadurch werden Ausströmöffnungen zu einer Mischkammer freigegeben, die von einer ringförmigen Speicherkammer für Druckgas umgeben ist. Das Druckgas kann nach Zerstörung der Berstscheibe durch die Mischkammer ohne Umweg über die Brennkammer aus dem Gehäuse strömen.

Die Erfindung schafft einen Gasgenerator, der sich durch eine geringe Verzögerungszeit bis zum Abbrennen des Treibstoffs sowie durch ein in engen Grenzen vorbestimmbares Abbrennverhalten auszeichnet. Der durch den Gasgenerator erzielbare Druckverlauf im Inneren eines Gassacks läßt sich damit in gewünschten engen Grenzen halten. Dies wird durch einen Gasgenerator der eingangs genannten. Art erreicht, der durch die Merkmale des Anspruchs 1 gekennzeichnet ist. Die durch den Abbrand des Zündmaterials entstehenden Gase und heißen Partikel Können sich im Expansionsraum innerhalb kürzester Zeit ausbreiten und gleichmäßig verteilt in den Brennraum strömen, wo sie zu einem schnelleren Abbrand des gesamten Treibstoffs führen. Ein möglicherweise ungleichmäßiges Abbrennen des Zündmaterials und Anzünden des Treibstoffs wird durch den Expansionsraum ausgeglichen.

Zudem ergibt sich durch Vorsehen des Expansionsraumes ein definierter Abstand zwischen dem Treibstoff und dem Zünder, was die Reproduzierbarkeit des Anzündverhaltens erleichtert. Die beim Abbrennen des Zündmaterials entstehenden heißen Gase und Partikel werden auf eine große Oberfläche verteilt, wenn sie über den Expansionsraum in die Brennkammer einströmen, was das Anzündverhalten verbessert.

Der Expansionsraum und die Brennkammer sind durch einen Diffusor mit wenigstens einer Durchgangsöffnung, vorteilhafterweise mehrere umfangsmäßig gleichmäßig verteilte Öffnungen, voneinander getrennt, wobei das bei Abbrand des Zündmaterials entstehende Gas über die Durchgangsöffnungen in die Brennkammer gelangt. Der Diffusor bildet damit eine Art Schutz vor der beim Abbrand des Zündmaterials entstehenden Druckwelle, die nur noch über die Durchgangsöffnungen in die Brennkammer gelangen kann. Damit wird die Zerstörung der Treibstofftabletten durch die Druckwelle weitgehend vermieden. Ferner kann durch Variation von Form, Lage und Anzahl der Durchgangsöffnungen im Diffusor das bislang umständlich variierbare Anzündverhalten auf einfache Weise gesteuert werden.

Das Gehäuse weist einen Gehäuseboden mit einer Befüllöffnung für den Treibstoff auf, was das Befüllen erleichtert. Die Befüllöffnung wird durch eine Bodenplatte verschlossen, in der der Zünder gas- und druckdicht befestigt ist. Bodenplatte und Zünder bilden damit eine vormontierte Einheit.

Ein elektrisch isolierender Körper, der sich zwischen der am Gehäuseboden durch Anschweißen befestigten Bodenplatte und dem bodenseitigen Ende des Diffusors sowie in die Brennkammer erstreckt, verhindert beim Anschweißen der Bodenplatte, das vorzugsweise mittels elektrischen Entladungsschweißens erfolgt, daß ein Schweißstrom über den Diffusor fließen kann. Der Schweißstrom kann dadurch nur zwischen Bodenplatte und Gehäuseboden fließen.

Der elektrisch isolierende Körper hat, wenn er elastisch ausgebildet ist, noch eine weitere Funktion, indem er den vorzugsweise tablettenförmig vorliegenden Treibstoff in seiner Lage fixiert. Die Lagefixierung des Treibstoffs wird auch dadurch erleichtert, daß die Brennkammer bis auf einige Öffnungen in den sie begrenzenden Wandungen geschlossen ist.

Vorteilhafte Ausgestaltungen der Erfindung bilden die Gegenstände der Unteransprüche.

Die Brennkammer umgibt den Expansionsraum vorzugsweise ringförmig.

Mit der bevorzugten Ausführungsform ist der Diffusor kappenartig ausgebildet und über den Zünder gestülpt.

Das Gehäuse weist ferner vorteilhafterweise eine Ausströmöffnung auf, und der Diffusor ist zur Ausströmöffnung hin offen. Damit kann sich ein Teil des erzeugten Druckgases und der Druckwelle unmittelbar zur vor Aktivierung des Gasgenerators geschlossenen Ausströmöffnung hin fortbewegen, um beispielsweise die Ausströmöffnung freizulegen oder deren Freilegung zu unterstützen.

Bei der bevorzugten Ausführungsform des Gasgenerators ist dieser ein Hybridgasgenerator. Die Brennkammer ist von einer Druckgas enthaltenden Druckkammer umgeben. Eine über einen Zwischenboden von der Brennkammer getrennte Mischkammer dient der Vermischung des beim Abbrennen des Zündmaterials und des Treibstoffs entstehenden Gases mit dem Druckgas. Die Gase sind so gewählt, daß bei ihrer Vermischung eine chemische Reaktion in Form einer sogenannten Nachverbrennung des heißen Gases stattfindet.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
Figur 1 eine Längsschnittansicht durch eine erste Ausführungsform des erfindungsgemäßen Gasgenerators, der als Hybrid-Ringgasgenerator ausgebildet ist,
Figur 2 eine vergrößerte Längsschnittansicht des in Figur 1 gezeigten, den Expansionsraum definierenden Diffusors, und
Figur 3 eine Querschnittsansicht nach der Linie III-III in Figur 2.

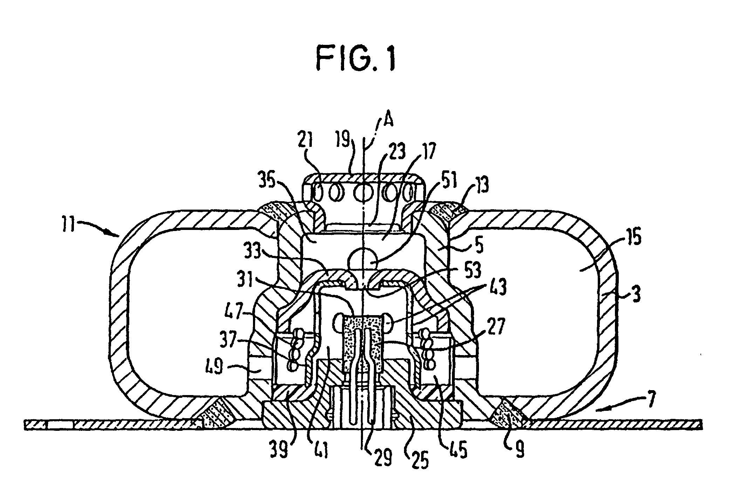

In Figur 1 ist ein Gasgenerator für ein Fahrzeuginsassen-Rückhaltesystem gezeigt, der als Hybrid-Ringgasgenerator ausgebildet ist und zum Aufblasen eines Fahrer-Gassacks dient. Der Gasgenerator ist zu der Mittelachse A im wesentlichen rotationssymmetrisch aufgebaut. Das Gehäuse des Gasgenerators weist eine äußere Wandung 3 und eine radial von dieser beabstandete innere Wandung 5 auf. Die äußere und die innere Wandung 3 bzw. 5 sind am bodenseitigen Ende 7 über eine Schweißnaht 9 sowie am gegenüberliegenden stirnseitigen Ende 11 über eine weitere Schweißnaht 13 gas- und druckdicht miteinander verbunden. Die innere Wandung 5 wird auch als Zuganker bezeichnet. Zwischen der äußeren und der inneren Wandung 3 bzw. 5 wird eine Druckkammer 15 gebildet, die mit Druckgas gefüllt ist. Die innere Wandung 5 trennt die Druckkammer 15 von einem radial inneren Raum, der radial von der inneren Wandung 5 begrenzt wird. Dieser Raum ist in einzelne Kammern unterteilt. Das Gehäuse weist am stirnseitigen Ende 11 die einzige Ausströmöffnung 17 für erzeugtes Gas auf, welche im nicht aktivierten Zustand durch ein kappenartiges Verschlußelement gas- und druckdicht verschlossen ist. Das kappenartige Verschlußelement umfaßt einen schubneutralen Diffusor 19 mit radialen Bohrungen 21 sowie eine den Strömungskanal im Inneren des Diffusors 19 schließende, an die ins Innere des Gasgenerators weisende Stirnwand des Diffusors 19 angeschweißte Berstscheibe 23.

Der zentrale, von der inneren Wandung 5 begrenzte Raum ist zum bodenseitigen Ende 7 durch eine Bodenplatte 25 verschlossen. Die Bodenplatte 25 wird durch elektrisches Entladungsschweißen am übrigen Gehäuse befestigt. Ein elektrischer Zünder 27 ist, vorzugsweise durch Schweißen, in der Bodenplatte 25 gas- und druckdicht befestigt und bildet mit dieser eine vormontierte Einheit. Der Zünder umfaßt eine um den Zünddraht angeordnete Primärladung sowie eine die Primärladung umgebende Sekundärladung. Die Ladungen sind von einer Zündkappe 31 umgeben, die an die Bodenplatte 25 angeschweißt ist.

Ein deckelartig ausgebildeter Zwischenboden 33 teilt den durch die innere Wandung 5 nach außen begrenzten Raum in zwei gasdicht voneinander getrennte Räume, nämlich einen oberen Raum, der eine Mischkammer 35 darstellt, sowie einen unteren Raum. Dieser Diffusor, der zur Unterscheidung vom Diffusor 19 als Zünderdiffusor im folgenden bezeichnet wird, weist an seiner oberen Stirnwand, mit der er am Zwischenboden 33 gas- und druckdicht anliegt, eine zentrische Öffnung auf. Der Zünderdiffusor 37 ist radial über entsprechende Passungen an seiner Außenseite oder in seiner Öffnung am Zwischenboden 33 lagefixiert. Am bodenseitigen Ende des Zünderdiffusors 37 liegt dieser an einem scheibenförmigen Körper 39 aus elektrisch isolierendem, elastischen Material an. Der Körper 39 wiederum liegt auf der Bodenplatte 25 auf.

Der Zünderdiffusor 37 teilt den unteren Raum in einen radial inneren Expansionsraum 41 und eine diesen umgebende Brennkammer 45, die über mehrere radiale auf dem Umfang gleichmäßig verteilte Durchgangsöffnungen 43 im Zünderdiffusor 37 mit dem Expansionsraum 41 in Strömungsverbindung steht. In den Expansionsraum 41 ragt der Zünder 27, der in radialer und axialer Richtung Abstand vom Zünderdiffusor hat.

Die Brennkammer 45 ist mit Treibstoff 47 in Tablettenform befüllt und weist keine unmittelbare Verbindung zur Mischkammer 35 auf. Mehrere radiale Öffnungen 49 in der inneren Wandung 5 stellen eine Strömungsverbindung zwischen der Brennkammer 45 und der Druckkammer 15 her. Weitere Öffnungen 51, von denen nur eine gezeigt ist, in der inneren Wandung 5 stellen schließlich eine Strömungsverbindung zwischen der Druckkammer 15 und der Mischkammer 35 her. Über eine zentral angeordnete Durchtrittsöffnung 53 in dem Zwischenboden 33 wiederum ist die Mischkammer 35 mit dem Expansionsraum 41 verbunden.

Das Befüllen des Gasgenerators geschieht folgendermaßen: Zuerst wird über die bei nicht vorhandener Bodenplatte 25 vorhandene Befüllöffnung der Treibstoff 47 in die Brennkammer 45 gefüllt. Anschließend wird die Einheit aus Bodenplatte 25 mit Zünder 27 und Körper 39 aufgesetzt und die Befüllöffnung geschlossen. Bis auf die Öffnungen 49 in der inneren Wandung 5 und in dem Zünderdiffusor 37 ist die Brennkammer geschlossen, so daß, insbesondere auch aufgrund des elastischen Körpers 39, die Füllung aus Treibstoff in Tablettenform in ihrer Lage fixiert ist. Anschließend wird die Bodenplatte 25 an dem Gehäuse durch elektrisches Entladungsschweißen gas- und druckdicht befestigt. Der Körper 39 aus elektrisch isolierendem Material verhindert dabei, daß ein Kurzschlußstrom über den Zünderdiffusor 37 fließen kann.

Anschließend wird der Gasgenerator mit Druckgas über die dann als Befüllöffnung für Druckgas dienende Ausströmöffnung 17 gefüllt. Während des Befüllvorgangs ist die Einheit aus Diffusor 19 und Berstscheibe 23 nahe der Befüllöffnung angeordnet und wird vom Druckgas umströmt. Das Druckgas verbreitet sich im gesamten Inneren des Gasgenerators, also in der Mischkammer 35, im Expansionsraum 41, in der Brennkammer 45 und insbesondere in der ringförmigen, das größte Volumen einnehmenden Druckkammer 15, so daß im Inneren des Gasgenerators ein gleicher, hoher Druck herrscht. Auch der Zünder 27 ist somit druckbelastet. Anschließend wird der Diffusor 19 in die Befüllöffnung 17 am stirnseitigen Ende 11 eingesetzt und durch Kondensator-Entladungsschweißen am Gehäuse gas- und druckdicht befestigt. Der Diffusor 19 steht im montierten Zustand gegenüber dem Gehäuse axial vor.

Bei einem Unfall wird über eine nicht gezeigte Auslösesensorik der Zünder 27 aktiviert, so daß die Primär- und die Sekundärladung abbrennen und Gas erzeugen. Darüber hinaus werden beim Abbrennen der Ladungen auch heiße Partikel erzeugt. Die Zündkappe 31 ist so ausgebildet, daß sich ihre Stirnwand, die der Berstscheibe 23 zugewandt ist, zuerst öffnet und heiße Gase und Partikel mit großer Geschwindigkeit, begleitet von einer Druckwelle, in den Expansionsraum 41 eintreten. Die heißen Gase expandieren im Expansionsraum 41 gleichmäßig und verteilen sich darin. Da sich, wie gesagt, die Stirnwand aufgrund von darin vorgesehenen sternförmigen Einprägungen zuerst öffnet, ergibt sich insbesondere eine Ausbreitung in axialer Richtung, so daß die heißen Gase und heißen Partikel sich zusammen mit der Druckwelle auch teilweise durch die zur Mischkammer divergierende Durchtrittsöffnung 53 hindurchbewegen, ohne zuvor einen Teil ihrer Energie durch Aufprall auf eine Wandung oder andere Teile verloren zu haben, und unmittelbar auf die Berstscheibe 23 treffen. Der Abstand der Bcrstscheibe 23 von dem Zünder 27 sowie ihre physikalischen und chemischen Eigenschaften sowie die Lage und Größe der Durchtrittsöffnung 51 sind so aufeinander abgestimmt, daß die heißen Gase und die heißen Partikel verbunden mit der Druckwelle die Berstscheibe 23 zerstören. Zwar wird es beim Erzeugen des heißen Gases durch das Abbrennen des Zündmaterials auch zu Nachreaktionen mit dem sich in der Mischkammer 35 und dem Expansionsraum 41 befindlichen Druckgas kommen, jedoch ist für die Zerstörung der Berstscheibe dies von untergeordneter Bedeutung, so daß deren Zerstörung so gut wie ausschließlich durch das Abbrennen des Zündmaterials erfolgt. Durch diese Konstruktion ist ein schnelles Öffnen des Gehäuses möglich, so daß die Drücke im Inneren des Gasgenerators, die bei den anschließend auftretenden Reaktionen erzeugt werden, relativ gering gehalten werden können. Je nach Abstimmung von Zündmaterial und Berstscheibe 23 kann diese, wenn gewünscht, nur durch die heißen Partikel in Verbindung mit der beim Abbrennen des Zündmaterials entstehenden Druckwelle oder nur durch die auftreffenden heißen Gase in Verbindung mit der Druckwelle zerstört werden.

Über die freigelegte Ausströmöffnung 17 gelangt das Gas in den Strömungskanal innerhalb des einstückig ausgebildeten Diffusors 19, wird in diesem umgelenkt und verläßt über die zahlreichen Bohrungen 21, ohne daß dadurch ein Schub erzeugt wird, den Gasgenerator und strömt in den Gassack.

Die nicht über die Durchtrittsöffnung 53 ausströmenden heißen Gasc und Partikel verteilen sich, wie bereits erwähnt, gleichmäßig im Expansionsraum 41, wo sie teilweise von der sie umgebenden Wandung des Zünderdiffusors 37 reflektiert werden. Über die zahlreichen radialen Durchgangsöffnungen 43 treten die Gase und heißen Partikel in die Brennkammer 45 ein, wo sie den Treibstoff 47 entzünden. Durch den Zünderdiffusor 37 wird auch verhindert, daß die sich im Inneren des Expansionsraumes 41 ausbreitende Druckwelle ungehindert in die Brennkammer 45 fortsetzt und dort zur Zerstörung der Treibstofftabletten führt. Nach dem Zünden des Treibstoffs 47 wird das entstehende heiße Gas über die Öffnungen 49 in die Druckkammer 15 strömen, sowie über die Durchgangsöffnungen 43 teilweise zurück in den Expansionsraum und von diesem über die Durchtrittsöffnung 53 in die Mischkammer. Das heiße Gas und das Druckgas sind üblicherweise so gewählt. daß bei Vermischung eine chemische Reaktion in Form einer Nachverbrennung des heißen Gases stattfindet. Eine bestmögliche Vermischung des heißen Gases mit dem Druckgas ist aus diesem Grunde erwünscht. Zusätzlich bewirkt diese Vermischung auch ein möglichst homogenes Abkühlen der heißen Gase. Damit die Vermischung der in die Druckkammer 15 einströmenden Gase erleichtert wird, sind die Öffnungen 49 vorzugsweise nicht exakt radial ausgerichtet. Vielmehr erstrecken sich die Mittelachsen der Öffnungen 49, axial gesehen, schräg zur radialen Richtung, wodurch sich in Umfangsrichtung bewegende Wirbel gebildet werden. Zusätzlich kann zur besseren Verwirbelung auch noch ein mit schrägen Leitflächen versehener Ring um die Außenseite der inneren Wandung 5 im Bereich der Öffnungen 49 vorgesehen sein. Das entstehende Gasgemisch, welches teilweise in der Druckkammer 15 nachreagiert, strömt über die Öffnungen 51 in die Mischkammer. Das heiße über die Durchtrittsöffnung 53 in die Mischkammer strömende Gas kann so auch noch mit dem Druckgas reagieren.

Die Ausführung des Gasgenerators zeichnet sich durch einen einfachen Aufbau aus, der zum Beispiel eine Booster-Ladung oder einen separaten Zünder für die Zerstörung der Berstscheibe 23 überflüssig macht.

Dadurch, daß die Zerstörung der Berstscheibe 23 so gut wie ausschließlich über das Abbrennen des Zündmaterials und damit sehr schnell erfolgt, ist es möglich, die Berstscheibe 23 annähernd gleichzeitig zur Entzündung des Treibstoffes 47 zu öffnen. Aufgrund der schnellen Öffnung des Gasgenerators kommt es nur zu einer relativ geringen Drucküberhöhung im Gasgenerator selbst, was die Materialbelastung reduziert und es ermöglicht, die gesamten Wandungen relativ dünn auszulegen, wodurch Gewichts- und Kostenvorteile entstehen.

Das Vorsehen des Zünderdiffusors 37 in Verbindung mit dem Expansionsraum schafft folgende Vorteile:
a) Die beim Abbrennen es Zündmaterials erzeugten heißen Gase und Partikel können sich gleichmäßig verteilen.
b) Der Abstand zwischen dem Treibstoff 37 und dem Zünder 27 ist exakt definiert, und die heißen Gase und Partikel können sich auf einer größeren Oberfläche verteilen und anschließend in die Brennkammer strömen, wodurch sich ein besseres Anzündverhalten erzielen läßt.
c) Das Anzündverhaltens kann durch die Größe und die Lage der Durchgangsöffnungen 43 leicht gesteuert werden.
d) Die entstehende Druckwelle beim Abbrennen des Zündmaterials, die teilweise auf den Zünderdiffusor 37 auftrifft, führt zu so gut wie keiner Zerstörung der Treibstofftabletten mehr. Der Körper 39 zum Fixieren des Treibstoffs 47 kann über den Zünderdiffusor 37 leicht fixiert werden. Durch den Zünderdiffusor 37 ist die Brennkammer 45 räumlich von dem für den Zünder freizuhaltenden Raum getrennt, so daß das Befüllen erleichtert wird. Bislang war dies erschwert, indem der Zünder unmittelbar an den Treibstoff angrenzte.
f) Dadurch, daß der Zünder 37 auch axial nicht unmittelbar an ein anderes Teil angrenzt, kann sich die Zündkappe 31 in Richtung Berstmembrane schnell öffnen. Dieses schnelle Öffnen ist beim gezeigten Gasgenerator besonders wichtig, da der Zünder unmittelbar zum Öffnen der Ausströmöffnung 17 verwendet wird. Der Diffusor begrenzt somit einen Expansionsraum, der auch den Weg der heißen Gase und heißen Partikel beim Abbrennen des Zündmaterials in Richtung Berstscheibc freihält.

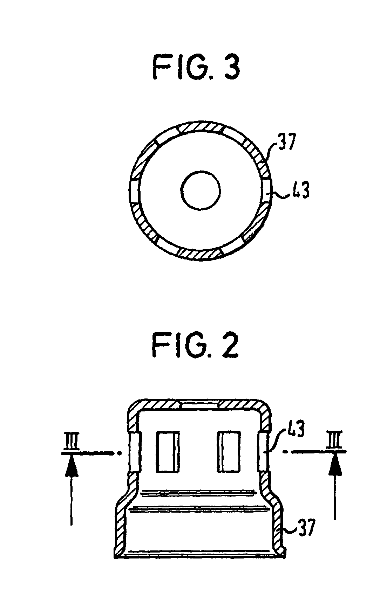

In den Figuren 2 und 3 ist der Zünderdiffusor 37, welcher eine kappenartige Form hat und über den Zünder 27 gestülpt wird, näher gezeigt. Die paarweise diametral gegenüberliegenden radialen Durchgangsöffnungen 43 können kreisringförmig oder, wie in Figur 2 gezeigt, auch rechteckig sein.

## Patentansprüche

1. Gasgenerator, insbesondere für Fahrzeuginsassen-Rückhaltesysteme,
mit wenigstens einer Treibstoff (47) enthaltenden Brennkammer (45) und wenigstens einem nahe des Treibstoffs (47) angeordneten Zünder (27) zum Zünden des Treibstoffs (47),
wobei die Brennkammer (45) vom Zünder (27) durch einen den Zünder (27) umgebenden Expansionsraum (41) für das bei Abbrand des Zündmaterials entstehende Gas getrennt ist,
und wobei der Expansionsraum (41) und die Brennkammer (45) durch einen Diffusor (37) voneinander getrennt sind,
**dadurch gekennzeichnet, daß** das Gehäuse des Gasgenerators einen Gehäuseboden mit einer Befüllöffnung für den Treibstoff (47) aufweist, die durch eine angeschweißte Bodenplatte (25) verschlossen ist, und daß ein elektrisch nichtleitender, elastischer Körper (39) vorgesehen ist, der sich zwischen der Bodenplatte (25) und dem bodenseitigen Ende des Diffusors (37) sowie in die Brennkammer (45) erstreckt, wo er den tablettenförmig vorliegenden Treibstoff (47) in seiner Lage fixiert.

2. Gasgenerator nach Anspruch 2, **dadurch gekennzeichnet, daß** die Brennkammer (45) den Expansionsraum (41) ringförmig umgibt.

3. Gasgenerator nach Anspruch 1 oder 2, **dadurch gekennzeichnet, daß** der Diffusor (37) wenigstens eine Druckgasöffnung (43) hat, über das das beim Abbrand des Zündmaterials entstehende Gas in die Brennkammer (45) gelangt.

4. Gasgenerator nach einem der vorhergehenden Ansprüche, **dadurch gekennzeichnet, daß** der Diffusor (37) kappenartig ausgebildet und über den Zünder (27) gestülpt ist.

5. Gasgenerator nach einem der vorhergehenden Ansprüche, **dadurch gekennzeichnet, daß** der Diffusor (37) in axialer und radialer Richtung vom Zünder (27) beabstandet ist.

6. Gasgenerator nach einem der vorhergehenden Ansprüche, **dadurch gekennzeichnet, daß** das Gehäuse eine Ausströmöffnung (17) aufweist und der Diffusor (37) zur Ausströmöffnung (17) hin offen ist.

7. Gasgenerator nach einem der vorhergehenden Ansprüche, **dadurch gekennzeichnet, daß** der Zünder (27) an der Bodenplatte (25) druck- und gasdicht befestigt ist.

8. Gasgenerator nach einem der vorstehenden Ansprüche, **dadurch gekennzeichnet, daß** der Zünder (27) eine Primär- und eine Sekundärladung sowie eine diese Ladungen umgebende Zündkappe (31) aufweist.

9. Gasgenerator nach einem der vorstehenden Ansprüche, **dadurch gekennzeichnet, daß** der Gasgenerator ein Hybrid-Gasgenerator ist und die Brennkammer (45) von einer Druckgas enthaltenden Druckkammer (15) umgeben ist.

10. Gasgenerator nach Anspruch 9, **dadurch gekennzeichnet, daß** eine durch einen Zwischenboden (33) von der Brennkammer (45) getrennte Mischkammer (35) vorgesehen ist.

11. Gasgenerator nach Anspruch 10, **dadurch gekennzeichnet, daß** sich der Diffusor (37) vom Bereich des Gehäusebodens bis zum Zwischenboden (33) erstreckt.

12. Gasgenerator nach Anspruch 10 oder 11, **dadurch gekennzeichnet, daß** der Zwischenboden (33) auch die Mischkammer (35) von dem Expansionsraum (41) trennt und daß der Diffusor (37) und der Zwischenboden (33) wenigstens eine Durchtrittsöffnung haben, die die Mischkammer (35) und den Expansionsraum (41) miteinander verbindet.

13. Gasgenerator nach einem der Ansprüche 10 bis 12, **dadurch gekennzeichnet, daß** der Diffusor (37) in radialer Richtung an dem Zwischenboden (33) lagefixiert ist.

14. Gasgenerator nach einem der Ansprüche 10 bis 13, **dadurch gekennzeichnet, daß** der Diffusor (37) eine zentrische Öffnung aufweist, über die beim Abbrand des Zündmaterials entstehende Gase und Partikel in Richtung zur durch eine Berstscheibe (23) verschlossene Ausströmöffnung (17) gelangen können.

15. Gasgenerator nach Anspruch 14, **dadurch gekennzeichnet, daß** die zentrische Öffnung im Diffusor (37) und eine dazu fluchtende Durchtrittsöffnung (53) im Zwischenboden (33) ein unmittelbares Anströmen der Berstscheibe (23) durch die beim Abbrand des Zündmaterials entstehenden Gase und Partikel erlauben.

## Claims

1. A gas generator, in particular for vehicle occupant restraint systems,
comprising at least one combustion chamber (45) containing propellant (47) and at least one igniter (27) arranged close to the propellant (47) for igniting the propellant (47),
the combustion chamber (45) being separated from the igniter (27) by an expansion space (41) surrounding the igniter (27) for the gas developing on deflagration of the ignition material,
and the expansion space (41) and the combustion chamber (45) being separated from each other by a diffuser (37),
**characterized in that** the housing of the gas generator has a housing base with a filling opening for the propellant (47) which is closed by a welded-on base plate (25), and that an electrically non-conducting, elastic body (39) is provided which extends between the base plate (25) and the end of the diffuser (37) on the base side, and also extends into the combustion chamber (45), where it locates the propellant (47), present in tablet form, in its position.

2. The gas generator according to claim 1, **characterized in that** the combustion chamber (45) annularly surrounds the expansion space (41).

3. The gas generator according to claim 1 or 2, **characterized in that** the diffuser (37) has at least one compressed gas opening (43) via which the gas developing on deflagration of the ignition material reaches the combustion chamber (45).

4. The gas generator according to any of the preceding claims, **characterized in that** the diffuser (37) is constructed as a cap and is put over the igniter (27).

5. The gas generator according to any of the preceding claims, **characterized in that** the diffuser (37) is axially and radially spaced from the igniter (27).

6. The gas generator according to any of the preceding claims, **characterized in that** the housing has an outflow opening (17) and the diffuser (37) is open towards the outflow opening (17).

7. The gas generator according to any of the preceding claims, **characterized in that** the igniter (27) is secured to the base plate (25) in a pressure- and gas-tight manner.

8. The gas generator according to any of the preceding claims, **characterized in that** the igniter (27) has a primary and a secondary charge and also an ignition cap (31) surrounding these charges.

9. The gas generator according to any of the preceding claims, **characterized in that** the gas generator is a hybrid gas generator and the combustion chamber (45) is surrounded by a pressure chamber (15) containing compressed gas.

10. The gas generator according to claim 9, **characterized in that** a mixing chamber (35) is provided which is separated from the combustion chamber (45) by an intermediate base (33).

11. The gas generator according to claim 10, **characterized in that** the diffuser (37) extends from the region of the housing base up to the intermediate base (33).

12. The gas generator according to claim 10 or 11, **characterized in that** the intermediate base (33) further separates the mixing chamber (35) from the expansion space (41) and that the diffuser (37) and the intermediate base (33) have at least one passage opening connecting the mixing chamber (35) and the expansion space (41) with each other.

13. The gas generator according to any of claims 10 to 12, **characterized in that** the diffuser (37) is fixed in position in the radial direction on the intermediate base (33).

14. The gas generator according to any of claims 10 to 13, **characterized in that** the diffuser (37) has a central opening via which gases and particles developing on deflagration of the ignition material can move towards the outflow opening (17) which is closed by a bursting sheet (23).

15. The gas generator according to claim 14, **characterized in that** the central opening in the diffuser (37) and a passage opening (53) in alignment therewith in the intermediate base (33) permit a direct impact on the bursting sheet (23) by the gases and particles developing on deflagration of the ignition material.

## Revendications

1. Générateur de gaz, en particulier pour des systèmes de retenue de passagers d'un véhicule,
comportant au moins une chambre de combustion (45) contenant du combustible (47) et au moins une amorce (27) pour l'amorçage du combustible (47), agencée à proximité du combustible (47),
la chambre de combustion (45) étant séparée de l'amorce (27) par une chambre de détente (41) entourant l'amorce (27), pour le gaz se formant à la combustion du matériau d'amorçage,
et la chambre de détente (41) et la chambre de combustion (45) étant séparées l'une de l'autre par un diffuseur (37),
**caractérisé en ce que** le boîtier du générateur de gaz présente un fond de boîtier avec un orifice de remplissage pour le combustible (47) qui est fermé par une plaque de fond soudée (25), et **en ce qu'**il est prévu un corps (39) élastique non électroconducteur qui s'étend entre la plaque de fond (25) et l'extrémité du diffuseur (37) côté fond ainsi que dans la chambre de combustion (45) où il fixe dans sa position le combustible (47) en présence sous forme de pastilles.

2. Générateur de gaz selon la revendication 1, **caractérisé en ce que** la chambre de combustion (45) entoure de manière annulaire la chambre de détente (41).

3. Générateur de gaz selon la revendication 1 ou 2, **caractérisé en ce que** le diffuseur (37) a au moins un orifice de gaz comprimé (43) via lequel le gaz se formant à la combustion du matériau d'amorçage parvient dans la chambre de combustion (45).

4. Générateur de gaz selon l'une des revendications précédentes, **caractérisé en ce que** le diffuseur (37) est réalisé sous forme de capuchon et vient couvrir l'amorce (27).

5. Générateur de gaz selon l'une des revendications précédentes, **caractérisé en ce que** le diffuseur (37) est espacé de l'amorce (27) en direction axiale et radiale.

6. Générateur de gaz selon l'une des revendications précédentes, **caractérisé en ce que** le boîtier présente un orifice de sortie d'écoulement (17) et le diffuseur (37) est ouvert vers l'orifice de sortie d'écoulement (17).

7. Générateur de gaz selon l'une des revendications précédentes, **caractérisé en ce que** l'amorce (27) est fixée sur la plaque de fond (25) de manière étanche à la pression et au gaz.

8. Générateur de gaz selon l'une des revendications précédentes, **caractérisé en ce que** l'amorce (27) présente une charge primaire et une charge secondaire ainsi qu'un capuchon d'amorce (31) entourant ces charges.

9. Générateur de gaz selon l'une des revendications précédentes, **caractérisé en ce que** le générateur de gaz est un générateur de gaz hybride et **en ce que** la chambre de combustion (45) est entourée par une chambre de pression (15) contenant du gaz comprimé.

10. Générateur de gaz selon la revendication 9, **caractérisé en ce qu'**il est prévu une chambre de mélange (35) séparée de la chambre de combustion (45) par un fond intermédiaire (33).

11. Générateur de gaz selon la revendication 10, **caractérisé en ce que** le diffuseur (37) s'étend depuis la zone du fond du boîtier jusqu'au fond intermédiaire (33).

12. Générateur de gaz selon la revendication 10 ou 11, **caractérisé en ce que** le fond intermédiaire (33) sépare aussi la chambre de mélange (35) de la chambre de détente (41) et **en ce que** le diffuseur (37) et le fond intermédiaire (33) ont au moins une ouverture de passage qui relie l'une à l'autre la chambre de mélange (35) à la chambre de détente (41).

13. Générateur de gaz selon l'une des revendications 10 à 12, **caractérisé en ce que** le diffuseur (37) est fixé dans sa position en direction radiale sur le fond intermédiaire (33).

14. Générateur de gaz selon l'une des revendications 10 à 13, **caractérisé en ce que** le diffuseur (37) présente une ouverture centrale via laquelle les gaz et particules se formant à la combustion du matériau d'amorçage peuvent parvenir en direction de l'orifice de sortie d'écoulement (17) fermé par une plaque de rupture (23).

15. Générateur de gaz selon la revendication 14, **caractérisé en ce que** l'ouverture centrale dans le diffuseur (37) et une ouverture de passage (53) en alignement avec celle-ci dans le fond intermédiaire (33) permettent un impact direct sur la plaque de rupture (23), des gaz et particules se formant à la combustion du matériau d'amorçage.
